# EUROPEAN PATENT APPLICATION

(11) **EP 2 369 518 A1**
(43) Date of publication of application: **28.09.2011**
(21) Application number: 10155822.9
(22) Date of filing: 08.03.2010
(51) Int. Cl.: G06F 21/00, G11B 20/00

(54) **A system and a method for copy protecting a block of software**

(71) Applicant: Siemens Aktiengesellschaft, 80333 München (DE)
(72) Inventor: Fuchs, Heiner, 91056, Erlangen (DE); Trapp, Lothar, 90537, Feucht (DE)

(57) **Abstract**

A system and a method for copy protecting a block of software

A system (2) for copy protecting a block of software (4) having a content sending device (6) including a content delivery block (8), said content delivery block (8) is delivered to a content receiving device (10) and the content delivery block (8) having the block of software (4) and a binding attribute (12) representative of a binding device (14) to which the execution of the block of software (8) is bound. The system (2) further includes a content receiving device (10) having a central processing unit (16), and the central processing unit checks an identity (18) of the binding device (14) based on the binding attribute (12), and executes the block of software (4) only upon detection of the binding device (14) by the central processing unit (8) of the content receiving device (10).

## Description

A system and a method for copy protecting a block of software

The present invention relates to a system and a method for copy protecting a block of software.

A major concern for software sellers is piracy of the software. Once the software is sold with a limited user license, it becomes difficult to protect it from being copied by other users who don't have an authorized license.

A possible solution to protect the software against copying is to encrypt the software with a particular key. In such a case, the software is encrypted by the software seller and a key is provided to the buyer to decrypt the software. The software still can be copied to any number of computers but it cannot be executed without the key to decrypt the software. The deficiency in this type of copy protection is that, the encryption can be broken down by the software pirates and in such a case, unencrypted version is soon available in the market.

Another possible way to protect the software against copying is to encrypt a block of software with an encryption key and the encryption key is provided in a hardware. The block of the software can only be executed in presence of the hardware. Whenever the software is to be executed, it always enquires for the presence of the hardware and if the hardware is present then the encryption key from that hardware is used to decrypt the software. In such a case, the hardware is tampered to verify the presence of hardware as always positive and the encryption keys are disassociated to be used separately by a software pirate.

To copy protect the software stronger encryption techniques could be used, but then the cost of the software would increase and at the same time, the processing time for the software execution would increase.

It is an object of the invention to copy-protect a block of software efficiently with ease of handling for both software provider and software user.

The above object is achieved by the system according to claim 1 and the method according to claim 10.

The underlying idea of the present invention is to provide copy protection of a block of software by binding the execution of that block of software to the presence of a specified hardware. To that end, the block delivered by the software vendor or the content sending device includes a binding attribute, along with the block of software to be delivered. The binding attribute is representative of a binding device to which the execution of said block of software is bound.

According to a further embodiment, to realize the invention at the execution end, the system also includes a content receiving device having a central processing unit, said central processing unit being adapted to check an identity of the binding device based on said binding attribute, and adapted to execute said block of software only upon detection of the binding device by the central processing unit of the content receiving device.

In one embodiment, the binding attribute includes a first block of information specifying a type of binding device and a second block of information specifying a unique identification of the binding device. This helps to identify a particular device to which the system should be bound for the purpose execution of the block of software for efficient copy protection.

According to one embodiment, the specified type of binding device is a central processing unit or an external data storage device.

According to another embodiment, the central processing unit of said content receiving device is adapted to process said binding attribute, wherein
- if the type of binding device specified in said binding attribute is a central processing unit, the central processing unit of said content receiving device is adapted to compare a serial number of said central processing unit of said content receiving device to the serial number specified in said binding attribute, and to execute said block of software only if said comparison yields a match, and
- if the type of binding device specified in said binding attribute is an external data storage device, the central processing unit of the content receiving device is adapted to detect a presence of an external data storage device connected thereto, and upon said detection, to compare a serial number of said detected external data storage device to the serial number specified in said binding attribute, and to execute the block of software only if said comparison yields a match.

Such a system provides an individualized distribution of the copy protected software block.

According to yet another embodiment, wherein the serial number specified in said binding attribute contains a default value, the central processing unit of said content receiving device being adapted to process said binding attribute, wherein,
- if the type of binding device specified in said binding attribute is a central processing unit, the central processing unit of the content receiving device is adapted to update the serial number of the binding attribute from said default value to a serial number of said central processing unit of said content receiving device and to subsequently execute the software block, or
- if the type of binding device specified in said binding attribute is an external data storage device, the central processing unit of the content receiving device is adapted detect a presence of an external data storage device connected thereto, and upon said detection, update the serial number of the biding attribute from said default value to a serial number of the said detected external data storage device, and to subsequently execute the block of the software.

Such a system provides a non-individualized distribution of the copy protected software block.

According to one embodiment, the content providing device is a memory card. Memory cards are portable, thus it makes the delivery of the block of the software easy.

According to another embodiment, the content providing device is a content server adapted to deliver said delivery block to the content receiving device connected thereto over a network. This makes the delivery of the block of software fast, as the block of the software is delivered fast when the content sending device connects to the content receiving device over a computer network.

According to yet another embodiment, the binding attribute further includes a copy counter specifying the number of times said block of software may be copied, said copy counter being updateable after each copy of said block of software by a content receiving device. This helps to keep a record of the number of times the block of software has been copied and also provide a mechanism to allow a limited number of copies of the block of software, wherein the allowed number of copies are predefined.

The above-mentioned and other features of the invention will now be addressed with reference to the drawings of preferred embodiments of the system and the method for copy protecting a block of software. The illustrated embodiments of the method and the system for copy protecting a block of software are intended to illustrate, but not to limit the invention. The drawings contain the following figures, in which like numbers refers to like parts, throughout the description and drawings.
FIG 1 is a schematic diagram of a system for copy protecting a block of software wherein the binding device is a central processing unit,
FIG 2 is a schematic diagram of a system for copy protecting a block of software wherein the binding device is an external data storage device,
FIG 3 is a flow chart showing a method for copy protecting a block of software according to one embodiment of the present invention.

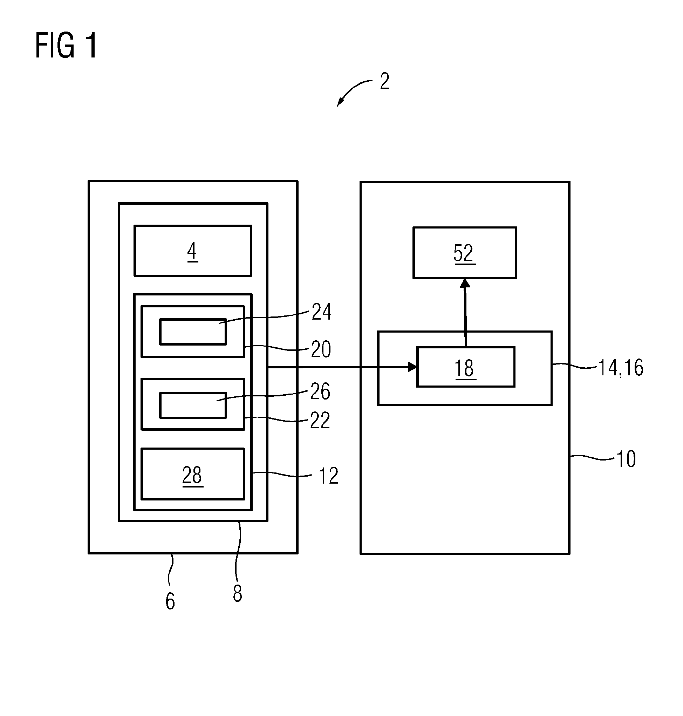

Referring to FIG 1, a system 2 for copy protecting a block of software 4 is described in accordance with one embodiment of the present invention. The illustrated system 2 broadly includes a content sending device 6 having a content delivery block 8 containing the block of software 4 and a binding attribute 12.

In the illustrated embodiment, the content sending device 6 includes a computer system, such as a server, capable of delivering the delivery block 8 to any content receiving device 10 via a computer network. In an alternate embodiment, the content sending device 6 may include an external data storage device, such as a memory card. Alternately, the external data storage devices may include any of an externally connected hard disk through USB port, compact disk, magnetic memory disc, an optical disk, a floppy disk, or any other data storage device connectable externally to the content receiving device 10.

The system 2 also includes a content receiving device 10 having a central processing unit (CPU) 16. The content receiving device 10 typically includes a computer system having CPU 16.

The content delivery block 8 is data stored into a memory location inside the content sending device 6. The content delivery block 8, in turn, further includes a block of software 4 to be delivered, and a binding attribute 12 representative of a binding device 14 to which the execution of said block of software 4 is bound.

The block of software 4 is a software application or a part of software application. In reference to FIG. 1, the block of software 4 and the remaining part of the software application are delivered separately. Alternatively, the block of software and the remaining part of the software application can be delivered together. The block of software 4 is bound to a binding device 14 while remaining part of the software application is unbound. In an alternative embodiment, both the block of software 4 and remaining part of the software application can be bound together to the binding device 14 or both the block of software 4 and remaining part of the software application can be bound to separate binding devices.

The binding attribute 12 contains a first block of information 20 specifying a type of the binding device 24, a second block of information 22 specifying a serial number of the binding device 26. Optionally, the binding attribute 12 may further include a copy counter 28 specifying the number of times said block of software 4 may be copied. The copy counter 28 is updated after each copy of said block of software 4 by the CPU 16 of the content receiving device 10. In an alternate embodiment, the binding attribute 12 only contain the first block of information 20 and the second block of information 22, to allow copying the block of software 4 unlimited numbers of times in presence of the binding device 14. In yet another embodiment, the binding attribute 12 may contain the first block of information 20 and the copy counter 28 to allow making only limited number of copy of the block of software 4 independent of the identity 18 of the binding device 14. Alternatively, the binding attribute 12 may contain any combination of the first block of information 20, the second block of information 22 or the copy counter 28 or none to allow copying the block of software 4 restricted up to a particular content receiving device 10 or a binding device 14 or number of times as desired by the provider of the block of software 4.

The first block of information 20 contains information specifying the type of binding device 24. Exemplarily, the type of device to which the execution of the block 4 of software is bound, i.e., the type of binding device 24, may include a CPU or an external data storage device, such as a memory card. If the specified type of binding device 24 is a CPU, then the CPU 16 of the content receiving device 10 functions as the binding device 14. While when the specified type of binding device 24 is a memory card, then the CPU 16 of the content receiving device 10 checks the binding attribute 12 with the binding device, i.e., the memory card.

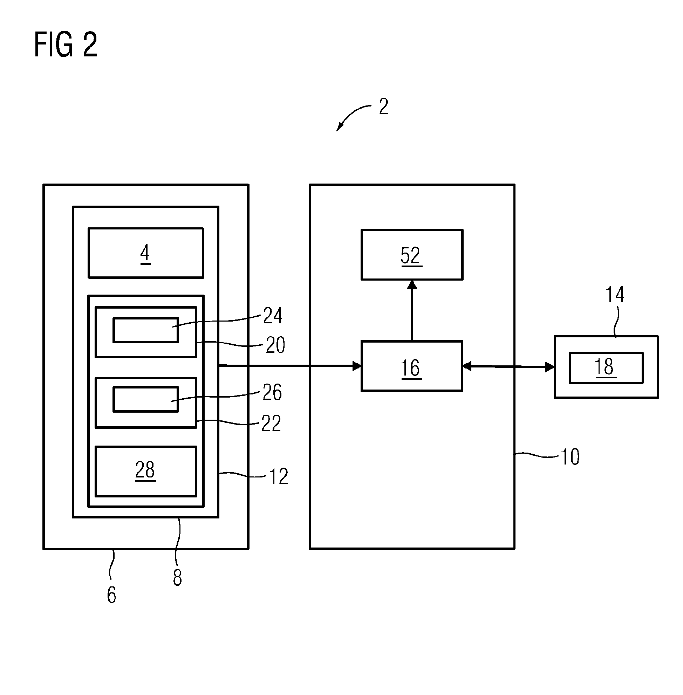

In the embodiment illustrated in FIG 1, the type of binding device 24 is a CPU. In an alternate embodiment illustrated referring to FIG 2, the type of binding device 24 is an external data storage device, such as memory card. In an alternate embodiment, the memory card can also function as a content sending device 6. In an another embodiment, any other external device such as a dongle or a compact disc or any such device, or any device internal to the content receiving device 10 such as hard disk or random access memory or any such device can be the type of binding device 24. In yet another embodiment, the binding device 14 can also be a computer network device such as router, modem or any other such device to which the content receiving device 10 is connected to content sending device 6 over a computer networks.

The second block of information 22 contains a specified serial number 26 of the binding device 14, wherein the serial number 26 is a unique identifier for that particular binding device 14. The serial number 26 is generally included in said binding device 14 inside the identity 18 of the binding device 14 by the manufacturer of the binding device 14. In a case when the binding device 14 is a CPU, the identity 18 is included in the basic input/output system of that CPU 16 to uniquely distinguish it from other CPUs. In the case when the binding device 14 is a memory card, the identity 18 may be contained in a file at a predefined memory location in the memory card. The identity 18 of the memory card can be accessed by a processor for processing the file placed inside said memory location. In an alternate embodiment, the second block of information 22 can contain computer network address details to which the block of software 4 is bound. In such a case, the block of software 4 can be bound to both the serial number 26 and the computer network address or any of them. Thus, in general, the second block of information 22 can contain any information like serial number, network address or any other identification detail which can help to uniquely identify the binding device 14.

As mentioned above, the binding attribute 12 may optionally further include a copy counter 28. The copy counter 28 is used to specify the maximum the number of times the block of software 4 may be copied. The copy counter 28 is updated by the CPU 16 of the content receiving device 10 by decrementing the copy counter by one each time the block of software 4 is copied inside the content receiving device 10. When the copy counter reaches a value of zero, no more copies are allowed anymore. The copy counter 28 typically includes a piece of program which is processed when the block of software 4 is to be copied and on being processed, the piece of program checks whether total number of copies have been less than or equal to the total number of allowed copy. Copying of the block of software 4 is only allowed if the total number of copies is less than the allowed number of copy.

The central processing unit 16 contained in the content receiving device 10, checks an identity 18 of the binding device 14 based on said binding attribute 12, and executes said block of software 4 only upon detection of the binding device 14 by the central processing unit 16 of the content receiving device 10. In some embodiments, for example, the central processing unit 16 may also be binding device 14 which binds the block of software 4 according to the FIG 1. The central processing 16 unit controls the processing activities of the content receiving device 10 from sending the request to receive the content delivery block 8, receiving the content delivery block 8, saving the content delivery block 8 to a memory location inside the content receiving device 10, checking the identity 18 of the binding device 14 and installing the block of the software 4 on a basis of the result of checking the identity 18 or any other functions required by content receiving device 10 to copy protect the block of software 4. The CPU 16 can be a generally available processor which can do any other general or special utility functions of the content receiving device 10 beyond the above said functions required by the content receiving device 10 to copy protect the block of software 4.

Referring to FIG 1, the type of binding device 24 is a CPU. Herein, the CPU 16 of said content receiving device 10 processes said binding attribute 12 and identifies specified type of binding device 24. When the type of binding device 24 is identified as a CPU, than the CPU 16 compares a serial number of said CPU 16 of said content receiving device 10 to the serial number 26 specified in said binding attribute 12, and executes said block of software 4 only if said comparison yields a match.

In an alternate embodiment in reference to FIG 1, if the serial number 26 specified in said binding attribute 12 contains a default value, such as zero, the CPU 16 of the content receiving device 10 updates the serial number 26 of the binding device 14 in the binding attribute 12 from said default value to a serial number of said CPU 16 of said content receiving device 10 and subsequently executes the block of software 4. The updated serial number 26 in the binding attribute 12 may not be changed anymore.

This would allow a non-individualized distribution of the delivered block of software 4.

In an alternate embodiment, the system 2 can be implemented on an already existing know-how protection system. The know-how protection system comprise of a first data device which delivers said block of software 4 to a second data device. The know-how protection system allows copying of software but doesn't allow opening of source code of said block of software 4. Once, data is delivered the software provider may check a serial number of central processing unit of said second data device or serial number of said second data device in a case when the second data device is a memory device like memory card, floppy disk, etc. When the system 2 is implemented over said existing know-how protection system, said first data device functions as the content sending device 6, said second data device functions as a content receiving device 10, while other components of the system 2 are implemented additionally over the know-how protection system.

Referring to FIG 2, the type of binding device 24 is a memory card. Herein CPU 16 of said content receiving device 10 processes said binding attribute 12 to identify the specified type of binding device 24. When the type of binding device 24 is identified to be a memory card, the CPU 16 detects a presence of the memory card connected thereto and upon said detection, compares a serial number of said detected memory card to the serial number 26 specified in said binding attribute 12, and executes the block of software 4 only if said comparison yields a match.

In an alternate embodiment in reference to FIG 2, if the serial number 26 specified in said binding attribute 12 contains a default value, such as zero, the CPU 16 of the content receiving device 10 detects a presence of the memory card connected thereto, and upon said detection, updates the serial number 26 of the binding device 14 in the binding attribute 12 from said default value to a serial number of the said detected memory card, and to subsequently execute the block of the software 4. The updated serial number 26 in the binding attribute 12 may not be changed anymore. This would allow a non-individualized distribution of the delivered block of software 4.

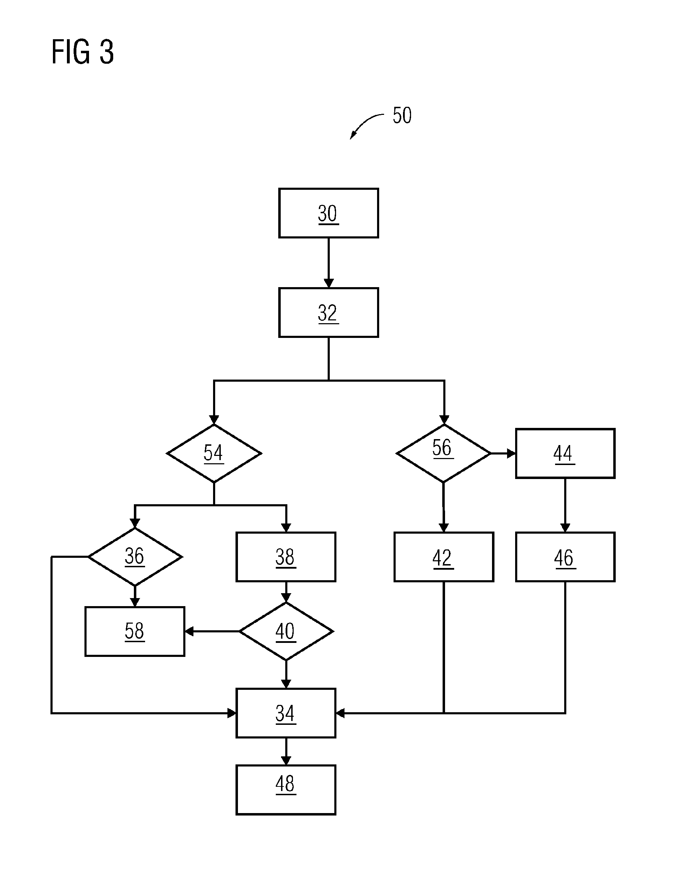

FIG 3 shows a flowchart for a method 50 for copy protecting a block of software 4 according to one embodiment of the present invention. The method 50 starts at step 30 by delivering said content delivery block 8. Step 32 involves processing of said binding attribute 12 to check an identity 18 of the binding device 14 based on said binding attribute 12, while step 34 involves executing said block of software 4 only upon detection of the binding device 14.

At step 32, processing of the binding attribute 12 determines the type of binding device 24. Subsequently, step 54 involves a decision, based on the type of binding device 24 identified at step 32. If at step 32 the type of binding device 24 is identified to be a CPU, then the decision at step 54 directs the control to step 36. At step 36, a serial number of said CPU 16 of a content receiving device 10 is compared to the serial number 26 specified in said binding attribute 12. If the comparison at step 36 yields a match, then subsequently at step 34 said block of software 4 is executed. If the comparison at step 36 does not yield a match, then subsequently at step 58 the method is terminated and the block of software 4 is not executed.

If at step 32 the type of binding device 24 is identified to be a memory card, then the decision at step 54 directs the control to step 38. At step 38, the presence of memory card is detected, and upon said detection at step 40, a serial number of said detected memory card is compared to the serial number 26 specified in said binding attribute 12. If the comparison at step 40 yields a match, then at step 34 said block of software 4 is executed. If the comparison at step 40 does not yield a match, then subsequently at step 58 the method is terminated and the block of software 4 is not executed.

In an alternate embodiment, at step 32, while processing the binding attribute 12 if said serial number 26 contains a default value, for example, zero, a decision is made in a subsequent step 56. If at step 32 the type of binding device 24 is identified to be a CPU, then the decision at step 56 directs the control to step 42. At step 42 the serial number 26 of the binding attribute 12 is updated from said default value to a serial number of said CPU 16 of said content receiving device 10 and subsequently at step 34 said block of software 4 is executed. The updated serial number 26 in the binding attributed 12 may not be changed anymore.

If at step 32 the type of binding device 24 is identified to be a memory card, then the decision at step 56 directs the control to step 44. At step 44, the presence of a connection of memory card is detected, and upon said detection, at step 46, the serial number 26 of the binding device 14 in the binding attribute 12 is updated from said default value to a serial number of the said detected memory card. Subsequently, at step 34 said block of software 4 is executed. The updated serial number 26 in the binding attribute 12 may not be changed anymore.

In a further embodiment in which a copy counter is included in the binding attribute 12, at step 48, the copy counter 28 is updated after each copy of said block of software 4 by a content receiving device 10.

## Claims

1. A system (2) for copy protecting a block of software (4) comprising:
- a content providing device (6) including a content delivery block (8) adapted to be delivered to a content receiving device (10), said delivery block (8) comprising said block of software (4) and a binding attribute (12) representative of a binding device (14) to which the execution of said block of software (4) is bound.

2. The system (2) according to claim 1, further comprising a content receiving device (10) having a central processing unit (CPU) (16), said CPU (16) being adapted to check an identity (18) of the binding device (14) based on said binding attribute (12), and adapted to execute said block of software (4) only upon detection of the binding device (14) by the CPU (16) of the content receiving device (10).

3. The system (2) according to any of claims 1 and2, wherein binding attribute (12) comprises a first block of information (20) specifying a type of the binding device (24) and a second block of information (22) specifying a serial number (26) of the binding device (14).

4. The system (2) according to claim 3, wherein the specified type of binding device (24) is a central processing unit or an external data storage device.

5. The system (2) according to claim 4, wherein said CPU (16) of said content receiving device (10) is adapted to process said binding attribute (12), wherein
- if the type of binding device (24) specified in said binding attribute (12) is the CPU, the CPU (16) of said content receiving device (10) is adapted to compare a serial number of said CPU (16) of said content receiving device (10) to the serial number (26) specified in said binding attribute (12), and adapted to execute said block of software (4) only if said comparison yields a match, and
- if the type of binding device (24) specified in said binding attribute (12) is an external data storage device, the CPU (16) of the content receiving device (10) is adapted to detect a presence of the external data storage device connected thereto, and upon said detection, adapted to compare a serial number of said detected external data storage device to the serial number (26) specified in said binding attribute (12), and adapted to execute the block of software (4) only if said comparison yields a match.

6. The system (2) according to claim 4, wherein the serial number (26) specified in said binding attribute (12) contains a default value, the CPU (16) of said content receiving device (10) being adapted to process said binding attribute (12), wherein,
- if the type of binding device (24) specified in said binding attribute (12) is a CPU, the CPU (16) of the content receiving device (10) is adapted to update the serial number (26) of the binding device (14) in the binding attribute (12) from said default value to a serial number of said CPU (16) of said content receiving device (10) and adapted to subsequently execute the block of software (4), or
- if the type of binding device (24) specified in said binding attribute (12) is an external data storage device, the CPU (16) of the content receiving device (10) is adapted detect a presence of the external data storage device connected thereto, and upon said detection, adapted to update the serial number (26) of the binding device (14) in the biding attribute (12) from said default value to a serial number of the said detected external data storage device, and adapted to subsequently execute the block of the software (4).

7. The system (2) according to any of the preceding claims, wherein the content sending device (6) is a memory card.

8. The system (2) according to any of the preceding claims, wherein said content sending device (6) is a content server adapted to deliver said content delivery block (8) to the content receiving device (10) connected thereto over a network.

9. The system (2) according to any of the preceding claims, wherein the binding attribute (12) further comprises a copy counter (28) specifying the number of times said block of software (4) may be copied, said copy counter (28) being updateable after each copy of said block of software (4) by a content receiving device (10).

10. A method (50) for copy protecting a block of software (4), comprising:
- delivering a content delivery block (8), said content delivery block (8) comprising said block of software (4) and a binding attribute (12) representative of a binding device (14) to which the execution of said block of software (4) is bound.

11. The method (50) according to claim 11, further comprising:
- receiving the delivery block (8),
- processing said binding attribute (12) to check an identity (18) of the binding device (14) based on said binding attribute (12), and
- executing said block of software (4) to a memory block (52) only upon detection of the binding device (14).

12. The method (50) according to any of claims 10 and 11, wherein said binding attribute (12) comprises a first block of information (20) specifying a type of the binding device (24) and a second block of information (22) specifying a serial number (26) of the binding device (14).

13. The method (50) according to claim 12, wherein the specified type of binding device (24) is a CPU or an external data storage device.

14. The method (50) according to claim 13, further comprising:
- processing the binding attribute (12), wherein if the type of binding device (24) specified in said binding attribute (12) is a CPU (16), then comparing a serial number of said CPU (16) of a content receiving device (10) to the serial number (26) specified in said binding attribute (12), and to execute said block of software (4) only if said comparison yields a match, and
- if the type of binding device (24) specified in said binding attribute (12) is an external data storage device, then detecting presence of an external data storage device, and upon said detection, comparing a serial number of said detected external data storage device to the serial number (26) specified in said binding attribute (12), and executing the block of software (4) only if said comparison yields a match.

15. The method (50) according to claim 13, further comprising:
- processing said binding attribute (12), and if said serial number (26) contains a default value, and
- if the type of binding device (24) is a CPU, then updating the serial number (26) of the binding device (14) in the binding attribute (12) from said default value to a serial number of said CPU (16) of said content receiving device (10) and to subsequently execute the block of software (4), or
- if the type of binding device (24) specified in said binding attribute (12) is an external data storage device, detecting a presence of an external data storage device, and upon said detection, updating the serial number (26) of the binding device (14) in the biding attribute (12) from said default value to a serial number of the said detected external data storage device, and to subsequently execute the block of the software (4).

16. The method (50) according to any of the claims 11 to 15, wherein the binding attribute (12) further comprises a copy counter (28) specifying the number of times said block of software (4) may be copied, updating said copy counter (28) after each copy of said block of software (4) by a content receiving device (10).
